# EUROPÄISCHE PATENTANMELDUNG

(11) **EP 4 468 099 A1**
(43) Veröffentlichungstag der Anmeldung: **27.11.2024**
(21) Anmeldenummer: 23175636.2
(22) Anmeldetag: 26.05.2023
(51) Int. Cl.: G05B 19/418, A21C 9/08, B25J 5/00

(54) **VORRICHTUNG UND VERFAHREN ZUM TRANSPORTIEREN VON TEIGEN**

(71) Anmelder: Bäckerei Maurer GmbH, 71364 Winnenden (DE)
(72) Erfinder: Maurer, Tobias, 71364 Winnenden (DE)
(74) Vertreter: Gleim Petri Patent- und Rechtsanwaltspartnerschaft mbB

(57) **Zusammenfassung**

Die Erfindung betrifft eine Vorrichtung und ein Verfahren zum Transportieren von Teigen. Die erfindungsgemäße Vorrichtung zum Transportieren von Teigen besitzt ein Maschinengestell und zumindest ein Behältnis, das an dem Maschinengestell befestigt ist. Erfindungsgemäß ist an dem Maschinengestell zumindest eine Aufnahmeeinheit für ein FTS (14) vorhanden.

Bei dem erfindungsgemäßen Verfahren zum Herstellen und Bearbeiten von Teigen laufen folgende Verfahrensschritte ab:
a) die Position der verschiedenen Behältnisse (20) und der notwendigen Bearbeitungsstationen (30) wird mittels einer Steuerungseinheit (60) erfasst,
b) die zuzubereitenden Teige und deren Ruhezeiten werden in die Steuerungseinheit (60) eingegeben,
c) die Steuerungseinheit (60) berechnet die optimalen Positionen der einzelnen Behältnisse (20),
d) die Steuerungseinheit(60) beauftragt zumindest ein FTS (14), die jeweiligen Behältnisse (20) von den bisherigen Positionen in die berechneten optimalen Positionen zu befördern,
e) das zumindest eine FTS (14) befördert die jeweiligen Behältnisse (20) von den bisherigen Positionen in die berechneten optimalen Positionen.

## Beschreibung

### TECHNISCHES GEBIET

Die Erfindung betrifft eine Vorrichtung und ein Verfahren zum Transportieren von Teigen. Bei solchen Teigen kann es sich sowohl um Teige für die Herstellung von Backwaren, als auch um andere teigartige Massen, beispielsweise um Hackfleisch- oder Brätmassen oder um ähnliche Lebensmittelmassen, handeln.

### STAND DER TECHNIK

Bäckereien arbeiten in der Regel mit unterschiedlichen Misch, Rühr- und Knetvorrichtungen, in denen die einzelnen Komponenten der Teige zunächst gemischt und anschließend zu einer homogenen Teigmasse verarbeitet werden können. Die Teige werden dabei in verschiedenen Behältnissen vorgelegt und manuell von einer Bearbeitungsstation zur nächsten transportiert. Dazu weisen die Behältnisse in der Regel Fahrrollen auf, so dass die Behältnisse von einem oder von mehreren Mitarbeitern von einer Bearbeitungsstation zur nächsten verschoben werden können. Bei einer solchen Bearbeitungsstation kann es sich beispielsweise um eine Knetmaschine oder Rührmaschine handeln. Nach dem Knetvorgang müssen die Teige in der Regel ruhen, wobei die Teigruhephase von Rezept zu Rezept unterschiedlich lang sein kann. Während der Teigruhephase werden die Behältnisse oftmals zur Seite geschoben, so dass die beispielsweise Knetmaschine möglichst rasch wieder zur Verfügung steht. Nach dem Abschluss der Teigruhephase werden die Behältnisse dann zu den einzelnen Aufarbeitungslinien gefahren, um die Teige zu portionieren und zu formen. Eine exakte Einhaltung der Teigruhezeiten ist von großer Bedeutung für die spätere Qualität der Produkte. Während dieses Prozesses entstehet beispielsweise der Geschmack, es bilden sich Aromen aus und die Krumen- und Krustenstruktur wird angelegt.

Insbesondere in größeren Betrieben sind häufig sehr große Behältnisse erforderlich, da große Mengen an Teigen in einem Durchgang hergestellt und weiterverarbeitet werden sollen. Die Behältnisse sind daher entsprechend schwer, so dass das Verfahren der Behältnisse anstrengend ist und einen hohen Kraftaufwand erfordert.

### DARSTELLUNG DER ERFINDUNG

Ausgehend von diesem vorbekannten Stand der Technik liegt der Erfindung somit die Aufgabe zugrunde, eine verbesserte Vorrichtung und ein verbessertes Verfahren zum Transportieren von Teigen anzugeben, durch die die Arbeitsbedingungen für die Belegschaft deutlich verbessert und qualifizierte Mitarbeiter möglichst optimal eingesetzt werden können.

Die erfindungsgemäße Vorrichtung ist durch die Merkmale des Hauptanspruchs 1 gegeben. Das erfindungsgemäße Verfahren ist durch die Merkmale des nebengeordneten Anspruchs 5 gegeben. Sinnvolle Weiterbildungen der Erfindung sind Gegenstand von sich an diese Ansprüche anschließenden weiteren Ansprüchen.

Die erfindungsgemäße Vorrichtung besitzt ein Maschinengestell und zumindest einem Behältnis, das an dem Maschinengestell befestigt ist. Erfindungsgemäß ist an dem Maschinengestell zumindest eine Aufnahmeeinheit für ein FTS (fahrerloses Transportsystem, englisch AGV: Automated Guided Vehicle) vorhanden. Bei einem FTS handelt es sich um ein flurgebundenes Förderfahrzeug mit einem eigenen Fahrantrieb, das automatisch gesteuert und berührungslos geführt wird. Derartige FTS dienen dem Materialtransport, insbesondere dem Ziehen oder Tragen von Fördergut. Auf diese Weise kann die Vorrichtung mittels eines FTS bewegt werden, was deutlich kraftsparender und damit weniger körperlich anstrengender ist. Bei der Aufnahmeeinheit für das FTS kann es sich insbesondere um ein entsprechendes Untergestell handeln, das mittels des FTS angehoben und transportiert werden kann.

Zusätzlich zu der Aufnahmeeinheit für ein FTS können an dem Maschinengestell mehrere Fahrrollen vorhanden sein. Sofern die entsprechende Vorrichtung einfach manuell bewegt werden kann, beispielsweise weil die Vorrichtung aktuell lediglich ein geringes Gewicht aufweist, kann auf diese Weise auf den Einsatz des FTS verzichtet werden. Dies kann insbesondere auch bei lediglich kleineren Anpassungen der Position der jeweiligen Vorrichtung vorteilhaft sein.

Insbesondere bei großen Teigmengen sind die Behältnisse entsprechend groß und damit auch entsprechend schwer. Sofern die Behältnisse bereits mit Teig oder mit Zutaten für den Teig gefüllt sind, sind die Vorrichtungen besonders schwer und damit auch schwierig manuell zu verfahren. Dies kann jedoch erforderlich sein, um die in den Behältnissen vorhandenen Teige beispielsweise zu weiteren Bearbeitungsstationen zu transportieren, oder um diese bei bestimmten Temperaturen ruhen zu lassen.

Durch den Einsatz eines FTS zum Transport der Behältnisse werden qualifizierte Mitarbeiter von einfachen Tätigkeiten, wie insbesondere dem Schieben und Ziehen von Teigkesseln, entlastet. Die qualifizierten Mitarbeiter stehen somit für qualitativ hochwertigere Aufgaben, beispielsweise für das Bedienen der Knetmaschinen oder das Portionieren und Formen der Teiglinge, zur Verfügung. Auf diese Weise kann auch ein Beitrag zur Reduzierung des Fachkräftemangels geleistet werden.

In einer besonders vorteilhaften Ausführungsform kann zumindest eine Sensoreinheit vorhanden sein. Mittels der zumindest einen Sensoreinheit kann insbesondere die Position der Vorrichtung festgestellt werden. In diesem Fall kann die Sensoreinheit insbesondere als GPS-Sensor ausgebildet sein. Die Position der jeweiligen Vorrichtung kann auf diese Weise beispielsweise von einer Steuereinheit, insbesondere von einem Computer, erfasst werden. Die erfassten Positionen der einzelnen Vorrichtungen können auf diese Weise jederzeit auf einem entsprechenden Bildschirm angezeigt werden. Um die Vorrichtung optimal zu der Bearbeitungsstation ausrichten zu können, können mehrere Sensoreinheit vorhanden sein. Dadurch kann beispielsweise auch eine Zentrierung der Vorrichtung vorgenommen werden.

Alternativ oder zusätzlich dazu kann die zumindest eine Sensoreinheit als Prüfsensor ausgebildet sein. Ein solcher Prüfsensor kann beispielsweise erfassen, ob die Bearbeitung des Teiges bereits abgeschlossen wurde, oder ob beispielsweise das Knetwerkzeug noch in das Behältnis eingetaucht ist. Der Prüfsensor könnte darüber hinaus auch die korrekte Positionierung der Vorrichtung überprüfen oder den Ablauf der vorgeschriebenen Teigruhezeit melden.

Die für die Teigherstellung notwendigen Bearbeitungsstationen sollten in diesem Fall ebenfalls angepasst werden, so dass die Vorrichtungen mit den Behältnissen optimal im Bereich der Bearbeitungsstationen positioniert werden können. Bei derartigen Bearbeitungsstationen kann es sich insbesondere um Mischstationen, Rührstationen oder Knetstationen handeln. Die Bearbeitungsstationen sind in der Regel stationär ausgebildet, so dass diese jeweils an einem vorgegebenen festen Platz in der Produktionsstätte positioniert sind. Da die Bearbeitungsstationen regelmäßig einen Anschluss für die Energieversorgung benötigen, ist ein Transport dieser Bearbeitungsstationen in der Regel nicht möglich. Die Bearbeitungsstationen sollten unterhalb des eigentlichen Bearbeitungswerkzeugs ausreichend Platz sowohl für die Vorrichtung zum Transportieren des Teiges als auch für das FTS aufweisen. Daher hat es sich als vorteilhaft herausgestellt, die Bearbeitungsstationen auf einem entsprechend angepassten Maschinengestell zu positionieren.

Bei dem erfindungsgemäßen Verfahren wird zunächst die Position der einzelnen Behältnisse und der notwendigen Bearbeitungsstationen mittels einer Steuereinheit erfasst. Darüber hinaus werden die zuzubereitenden Tage und deren Ruhezeiten in die Steuerungseinheit eingegeben. Mittels dieser Daten berechnet die Steuerungseinheit die optimalen Positionen der einzelnen Behältnisse. Anschließend beauftragt die Steuerungseinheit zumindest ein FTS, die jeweiligen Behältnisse von den bisherigen Positionen in die berechneten optimalen Positionen zu befördern. Das zumindest eine FTS führt die entsprechenden Aufträge aus und befördert die Behältnisse in die berechneten optimalen Positionen.

Mit dem erfindungsgemäßen Verfahren kann das Herstellen und Bearbeiten von Teigen somit weiter automatisiert werden, wobei insbesondere der Transport der einzelnen Behältnisse vereinfacht wird. Dies führt zu einer geringeren körperlichen Beanspruchung der Mitarbeiter und spart darüber hinaus Zeit.

Durch die Automatisierung des Teigruheprozesses kann darüber hinaus der Produktionsablauf in diesem sehr sensiblen Bereich deutlich besser gesteuert werden (Industrie 4.0). Bei den herkömmlichen, manuellen Verfahren kann der Faktor Mensch durchaus von Nachteil sein, da dort Teigruhezeiten teilweise nicht exakt eingehalten werden können. Durch die Automatisierung kann auch die Produktqualität gesteigert und konstant auf einem hohen Niveau gehalten werden. Davon profitieren letztendlich insbesondere die Endkunden.

Bei der Steuerungseinheit kann es sich insbesondere um ein Computerprogramm handeln, das insbesondere auf einem Arbeitsplatz-Computer wie beispielsweise einem Industrie-Touch-PC in robuster Edelstahl-Ausführung, grundsätzlich aber auch auf einem Mobiltelefon, einem Tablet oder einem Notebook laufen kann. Vorzugsweise kann dabei die Position der einzelnen Bearbeitungsstationen und der Behältnisse auf dem entsprechenden Bildschirm angezeigt werden, so dass eine zusätzliche Kontrolle der jeweiligen Positionen durch einen Mitarbeiter möglich ist.

Die ersten beiden Verfahrensschritte können vorzugsweise in beliebiger Reihenfolge durchgeführt werden. Beispielsweise können die einzelnen zuzubereitenden Teige bereits in die Steuerungseinheit eingegeben werden, während parallel dazu bereits die Positionen der verschiedenen Behältnisse erfasst wird.

Um das Eingeben der benötigten Teige zu erleichtern und zu beschleunigen, können die erforderlichen Bearbeitungsschritte zur Herstellung eines definierten Teiges in der Steuerungseinheit abgespeichert werden. Dabei werden auch die jeweiligen Zeiten für einzelne Bearbeitungsschritte sowie einzuhaltende Ruhezeiten erfasst und gespeichert.

Mit dem erfindungsgemäßen Verfahren können grundsätzlich eine Vielzahl an unterschiedlichen Teigen parallel hergestellt und bearbeitet werden. Dabei kann in die Steuerungseinheit auch eine Warteliste mit zukünftigen Aufträgen eingegeben werden. Dies reduziert mögliche Leerzeiten von Bearbeitungsstationen, so dass die Arbeitszeit und die Arbeitsgeräte möglichst optimal genutzt werden können. Insbesondere bei größeren Betrieben kann eine solche Warteliste mit zukünftigen Aufträgen sinnvoll sein.

Vorzugsweise berechnet die Steuerungseinheit in regelmäßigen oder unregelmäßigen zeitlichen Abständen neu die optimalen Positionen der jeweiligen Behältnisse und beauftragt das zumindest eine FTS entsprechend mit der neuen Positionierung. Dadurch können kurzfristige Änderungen berücksichtigt werden. Darüber hinaus wird auf diese Weise ein möglichst kontinuierlicher Arbeitsablauf möglich, da die jeweiligen Behältnisse zeitnah neu positioniert werden, beispielsweise wenn die Ruhezeit abgelaufen ist. In diesem Fall könnte das entsprechende Behältnis automatisch nach Ablauf der Ruhezeit zu der jeweiligen nächsten Bearbeitungsstation transportiert werden. Bei einer solchen Bearbeitungsstation kann es sich sowohl um eine stationäre Bearbeitungsstation wie insbesondere einen Backofen, einen Arbeitstisch, einen Brezelschlinger oder einen Knickarmroboter handeln. Grundsätzlich kann es sich bei einer solchen Bearbeitungsstation um jede Art von Teigaufbereitungsanlage oder Produktionslinie handeln, in der die vorab hergestellten Teige oder Massen weiter verarbeitet werden können Beispielsweise können die fertigen Teige nach Ablauf der Ruhezeit automatisch einem Mitarbeiter übergeben werden, um manuell Teiglinge zu formen. Auch eine automatische Überführung von Teiglingen in einen Backofen oder von den fertig gebackenen Backwaren aus dem Backofen ist mit dem erfindungsgemäßen Verfahren grundsätzlich möglich. Dies führt zu einer Reduzierung von Prozessstörungen und individuellen Fehlern.

Die Steuerungseinheit kann die jeweiligen Bearbeitungsstationen vorzugsweise abhängig von der gewünschten Gesamtproduktionsmenge und der erforderliche Teigruhezeiten automatisch mit der Zubereitung eines nächsten Teiges beauftragen, sobald ein entsprechendes Zeitfenster vorhanden ist. Auf diese Weise können die einzelnen Bearbeitungsstationen optimal ausgenutzt werden. Dabei kann die Steuerungseinheit regelmäßig überprüfen, ob die jeweiligen Abläufe eingehalten werden. Bei einer Störung der einzelnen Abläufe, kann die Steuerungseinheit daraufhin Anpassungen hinsichtlich des Transports der einzelnen Behältnisse und/oder hinsichtlich des Starts einzelner Bearbeitungsstationen vornehmen. So kann insbesondere der Startzeitpunkt nachfolgend geplanter Teige angepasst werden, so dass die Teigruhezeiten nicht über- oder unterschritten werden müssen.

Bei Bäckereibetrieben kann eine Kombination mit bereits vorhandenen Technologien erfolgen, beispielsweise mit einem Brezelschlinger oder einem Knickarmroboter. Ein solcher Knickarmroboter kann insbesondere zum Ablegen eines mit Produkten belegten Gärgutträgers in einen Wagen eingesetzt werden. Der Transport dieser Wägen erfolgt klassisch manuell durch einen Mitarbeiter. Auch der Wagen könnte jedoch als Behältnis dienen und somit mittels eines FTS entsprechend der Erfindung transportiert werden. Die Mitarbeiter müssten in diesem Fall lediglich die einzelnen Prozesse überwachen, nicht mehr jedoch beispielsweise die Brezeln von Hand formen.

Bei Metzgereibetrieben kann die erfindungsgemäße Vorrichtung und das entsprechende Verfahren insbesondere bei der Produktion von Wurstwaren oder von Brätlingen eingesetzt werden, wobei sowohl fleischhaltige als auch auf Pflanzenbasis basierende Produkte hergestellt und transportiert werden können. Aus hygienischen Gründen kann in diesem Fall der Einsatz von spritzwassergeschützten FTS erforderlich sein.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschreiben und erläutert. Es zeigen:
- Fig. 1: eine schematische Ansicht zweier erfindungsgemäßer Vorrichtungen,
- Fig. 2: eine schematische Ansicht der beiden Vorrichtungen gemäß Fig. 1, wobei die in der Zeichnung rechts dargestellte Vorrichtung von einem FTS unterfahren wurde und bereit ist zum Transport an eine andere Position,
- Fig. 3: eine schematische Ansicht einer Bearbeitungsstation mit einem Knethaken mit einer im Bereich der Bearbeitungsstation platzierten erfindungsgemäßen Vorrichtung,
- Fig. 4: ein schematisches Fließschema zum Ablauf des erfindungsgemäßen Verfahrens.

### WEGE ZUM AUSFÜHREN DER ERFINDUNG

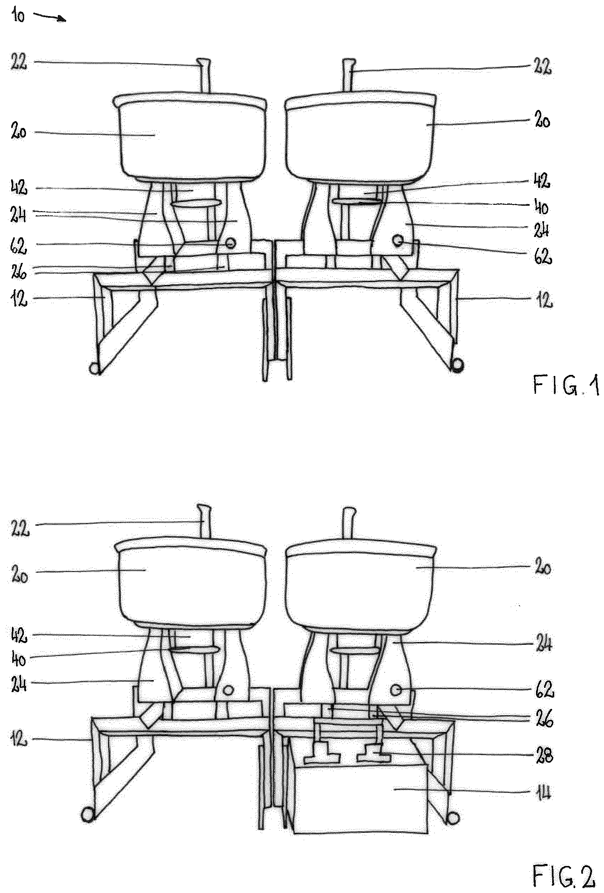

In Fig. 1 und 2 sind jeweils zwei erfindungsgemäße Vorrichtungen 10 zum Transportieren von Teigen dargestellt. Die beiden Vorrichtungen 10 sind jeweils auf einem Ablagegestell 12 gelagert. Auf diesen Ablagegestellen 12 werden die Vorrichtungen 10 im vorliegenden Beispielsfall immer dann gelagert, wenn die Vorrichtungen 10 nicht von einem FTS 14 transportiert werden und auch nicht im Bereich einer Bearbeitungsstation platziert werden. Insbesondere werden die Vorrichtungen 10 auf einem solchen Ablagegestell 12 gelagert, wenn die in der Vorrichtung 10 zubereiteten Teige ruhen müssen.

Die Vorrichtungen 10 besitzen jeweils ein topfartiges Behältnis 20, in dem die Teige oder Massen zubereitet und gelagert werden. Das Behältnis 20 ist an einem Maschinengestell 22 befestigt. Das Maschinengestell 22 besitzt im vorliegenden Beispielsfall mehrere Fußstege 24, die unterhalb des Behältnisses 20 angeordnet sind. Unterhalb der Fußstege 24 sind jeweils mehrere Bolzen 26 vorhanden. Mit den Fußstegen 24 können die Vorrichtungen 10 auf dem Ablagegestell 12 positioniert und abgestellt werden.

Die Bolzen 26 dienen als Aufnahmeeinheit für ein FTS 14 (siehe Fig. 2). Soll eine der beiden Vorrichtungen 10 an eine andere Position transportiert werden, fährt das FTS 14 unter das Ablagegestell 12, so dass die Bolzen 26 auf dem Transportgerüst 28 des FTS 14 aufliegen. Die Vorrichtung 10 wird dadurch von dem Ablagegestell 12 abgehoben und kann mit dem FTS 14 an eine andere Position transportiert werden.

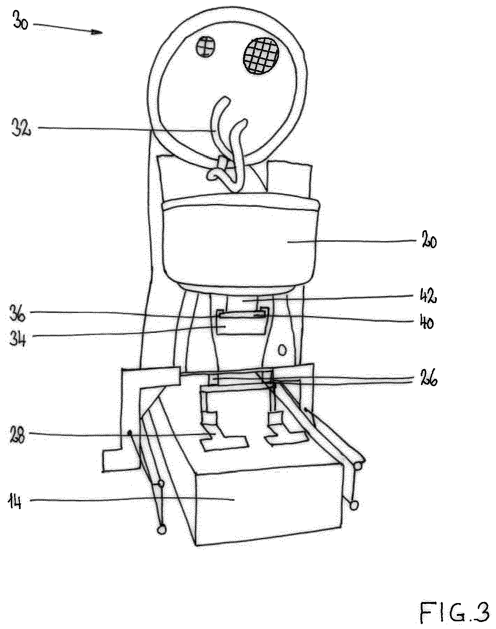

Bei dieser anderen Position kann es sich beispielsweise um eine Bearbeitungsstation 30 handeln wie dies in Fig. 3 dargestellt ist. Die Bearbeitungsstation 30 ist stationär ausgebildet und weist im vorliegenden Beispielsfall einen Knethaken 32 auf. Die Bearbeitungsstation weist darüber hinaus einen Lagerblock 34 mit einer Nut 36 auf. In diese Nut 36 kann die umlaufende Feder 40 eines Rundbolzens 42 der Vorrichtung 10 eingreifen, um die Vorrichtung 10 in der Bearbeitungsstation 30 zu platzieren und dort lagezufixieren. Der Rundbolzen 42 ist im vorliegenden Beispielsfall unterhalb des Behältnisses 20 zwischen den beiden Fußstegen 24 platziert. Durch den Rundbolzen 42 und die umlaufende Feder 40 kann die Vorrichtung 10 an die Bearbeitungsstation 30 übergeben werden, ohne dass eine zusätzliche Abstützung der Vorrichtung 10 durch das FTS 14 erforderlich wäre. Sobald die Vorrichtung 10 daher sicher an die Bearbeitungsstation 30 übergeben würde, steht das FTS 14 wieder für neue Transportaufträge zur Verfügung.

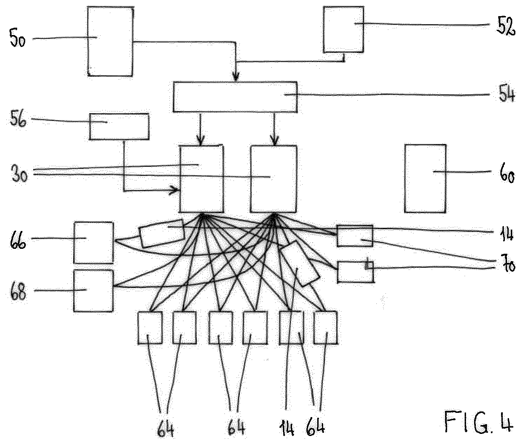

Ein schematisches Fließschema zum Ablauf des erfindungsgemäßen Verfahrens ist in Fig. 4 dargestellt. Im vorliegenden Beispielsfall sind zwei Bearbeitungsstationen 30 in Form von Knetvorrichtungen vorhanden, in denen entsprechende Teige zubereitet werden. Größere Mengen an Zutaten 50, 52 (beispielsweise Mehl und Wasser) werden über eine Dosiervorrichtung 54 automatisiert den jeweils in der Bearbeitungsstation 30 positionierten Behältnissen 20 zugeführt. Darüber hinaus ist eine Kleinmengendosierung 56 vorhanden, über die kleinere Mengen an Zutaten automatisiert zugeführt werden können. Im Gegensatz zu dem hier dargestellten Beispielsfall könnten auch mehr Dosiervorrichtungen 54 und mehr Kleinmengendosierungen 56 vorhanden sein. Auch könnte das Verfahren mit mehr oder weniger Bearbeitungsstationen 30 durchgeführt werden.

Die Positionen der einzelnen Behältnisse 20 und damit auch der Vorrichtungen 10 wird von einer Steuerungseinheit 60 erfasst. Dazu sind die Vorrichtungen 10 im vorliegenden Beispielsfall mit einer Sensorvorrichtung 62 ausgestattet. Die Sensorvorrichtung 62 verfügt über einen oder mehrere Sensoren, so dass eine möglichst exakte Positionsbestimmung der Vorrichtungen 10 möglich ist.

Die Steuerungseinheit 60 wurde mit den zuzubereitenden Teigen programmiert und hat aufgrund der eingegebenen Daten und der ebenfalls einprogrammierten Ruhezeiten der zuzubereitenden Teige berechnet, in welcher Reihenfolge die Teige zubereitet werden und an welchen Positionen die einzelnen Vorrichtungen 10 zu welcher Zeit positioniert werden sollen. Aufgrund dieser Daten beauftragt die Steuerungseinheit im vorliegenden Beispielsfall zwei FTS 14 jeweils mit dem Transport der einzelnen Behältnisse 20. So können die Behältnisse 20 nach Beendigung des Knetvorgangs in den Bearbeitungsstationen 30 beispielsweise auf verschiedenen Teigruheplätzen 64 positioniert werden. Nach Ablauf der vorgesehenen Teigruhezeit können die Behältnisse 20 automatisch von einem FTS 14 zu einer weiteren Bearbeitungsstation 66, 68 oder zu einem manuellen Arbeitsplatz 70 transportiert werden. Bei den weiteren Bearbeitungsstationen 66, 68 kann es sich beispielsweise um einen Brezelschlinger, einen Teigportionierer oder um eine sonstige Bearbeitungsstation handeln. Sofern keine Ruhezeit für den Teig erforderlich ist, kann das entsprechende Behältnis 20 auch direkt von der Bearbeitungsstation 30 zu dem manuellen Arbeitsplatz 70 oder zu einer der weiteren Bearbeitungsstationen 66, 68 transportiert werden.

An dem manuellen Arbeitsplatzes 70 kann beispielsweise auch eine manuelle Zugabe von einzelnen Zutaten, beispielsweise von Hefe, von Eiern oder von Gewürzen möglich sein. In diesem Fall würde in der Regel zuerst die manuelle Zugabe der Zutaten erfolgen. Anschließend wird das Behältnis 20 mit einem FTS 14 zu der Bearbeitungsstation 30 transportiert, wo die übrigen Zutaten zugegeben werden können. Von dieser Bearbeitungsstation 30 kann das Behältnis 20 dann weiter zu einer weiteren Bearbeitungsstation 66, 68, zu einem Teigruheplatz 64 oder erneut zu einem manuellen Arbeitsplatz 70 transportiert werden.

Die Anzahl und die Art der weiteren Bearbeitungsstationen 66, 68 beziehungsweise der manuellen Arbeitsplätze 70 kann dabei individuell an die unterschiedlichen betrieblichen Abläufe angepasst werden. Grundsätzlich ist es auch nicht erforderlich, ständig alle weiteren Bearbeitungsstationen 66, 68 beziehungsweise manuellen Arbeitsplätze 70 zu nutzen. Auch die Anzahl der Teigruheplätze 64 kann an die jeweiligen Bedürfnisse angepasst werden. Dabei können die Teigruheplätze 64 in der Produktionsstätte verteilt angeordnet werden, abhängig von dem jeweiligen Platzbedarf und der gewünschten Raumaufteilung.

Im Gegensatz zu dem hier dargestellten Ausführungsbeispiel könnten auch mehr oder weniger FTS 14 eingesetzt werden. Die Anzahl der eingesetzten FTS 14 ist grundsätzlich frei wählbar und abhängig von der Anzahl der Verfahrwege und der Anzahl der zu transportierenden Behältnisse 20.

## Patentansprüche

1. Vorrichtung (10) zum Transportieren von Teigen
- mit einem Maschinengestell (22),
- mit zumindest einem Behältnis (20), das an dem Maschinengestell (22) befestigt ist,
- **dadurch gekennzeichnet, dass**
- an dem Maschinengestell (22) zumindest eine Aufnahmeeinheit (26) für ein FTS (14) vorhanden ist.

2. Vorrichtung nach Anspruch 1,
- **dadurch gekennzeichnet, dass**
- an dem Maschinengestell (22) mehrere Fahrrollen vorhanden sind.

3. Vorrichtung nach Anspruch 1 oder 2,
- **dadurch gekennzeichnet, dass**
- zumindest eine Sensoreinheit (62) vorhanden ist.

4. Vorrichtung nach Anspruch 3,
- **dadurch gekennzeichnet, dass**
- die zumindest eine Sensoreinheit (62) als GPS-Sensor ausgebildet ist.

5. Verfahren zum Herstellen und Bearbeiten von Teigen mit folgenden Verfahrensschritten
a) die Position der verschiedenen Behältnisse (20) und der notwendigen Bearbeitungsstationen (30) wird mittels einer Steuerungseinheit (60) erfasst,
b) die zuzubereitenden Teige und deren Ruhezeiten werden in die Steuerungseinheit (60) eingegeben,
c) die Steuerungseinheit (60) berechnet die optimalen Positionen der einzelnen Behältnisse (20),
d) die Steuerungseinheit(60) beauftragt zumindest ein FTS (14), die jeweiligen Behältnisse (20) von den bisherigen Positionen in die berechneten optimalen Positionen zu befördern,
e) das zumindest eine FTS (14) befördert die jeweiligen Behältnisse (20) von den bisherigen Positionen in die berechneten optimalen Positionen.

6. Verfahren nach Anspruch 5,
- **dadurch gekennzeichnet, dass**
- die Verfahrensschritte a) und b) in beliebiger Reihenfolge durchgeführt werden können.

7. Verfahren nach Anspruch 5 oder 6,
- **dadurch gekennzeichnet**,
- die Bearbeitungsschritte zur Herstellung eines definierten Teiges sowie die diesbezüglichen Ruhezeiten in der Steuerungseinheit (60) abgespeichert sind.

8. Verfahren nach einem der Ansprüche 5 bis 7,
- **dadurch gekennzeichnet, dass**
- Verfahrensschritte c), d) und e) in regelmäßigen oder unregelmäßigen zeitlichen Abständen durchgeführt werden.

9. Verfahren nach einem der Ansprüche 5 bis 8,
- **dadurch gekennzeichnet, dass**
- mehrere Behältnisse (20) eingesetzt werden, so dass mehrere Teige parallel hergestellt und bearbeitet werden können.

10. Verfahren nach einem der Ansprüche 5 bis 9,
- **dadurch gekennzeichnet, dass**
- die Steuerungseinheit (60) nach Ablauf der Ruhezeit eines Teiges automatisch ein FTS (14) beauftragt, das jeweilige Behältnis (20) zur nächsten Bearbeitungsstation (30, 66, 68, 70) zu befördern.

11. Verfahren nach einem der Ansprüche 5 bis 10,
- **dadurch gekennzeichnet, dass**
- die Steuerungseinheit (60) die Bearbeitungsstationen (30, 66, 68, 70) abhängig von der Gesamtproduktionsmenge und der erforderlichen Teigruhezeiten mit der Zubereitung des nächsten Teiges beauftragt.

12. Verfahren nach Anspruch 10,
- **dadurch gekennzeichnet, dass**
- die Steuerungseinheit (60) regelmäßig überprüft, ob die jeweiligen Abläufe eingehalten werden,
- die Steuerungseinheit (60) bei einer Störung der Abläufe entsprechende Anpassungen hinsichtlich des Transports der einzelnen Behältnisse (20) und/oder hinsichtlich des Starts einzelner Bearbeitungsstationen (30, 66, 68, 70) vornimmt.
